# EUROPEAN PATENT SPECIFICATION

(11) **EP 2 843 255 B1**
(45) Date of publication and mention of the grant of the patent: **06.04.2016**
(21) Application number: 12726141.0
(22) Date of filing: 27.04.2012
(51) Int. Cl.: F16F 9/02

(54) **GAS SPRING INCLUDING A SAFETY SYSTEM**
GASFEDER MIT EINEM SICHERHEITSSYSTEM
RESSORT À GAZ ÉQUIPÉ D'UN SYSTÈME DE SÉCURITÉ

(43) Date of publication of application: 04.03.2015
(73) Proprietor: Azol-Gas, S. L., 01015 Vitoria, Álava (ES)
(72) Inventor: ESTIRADO, Félix, E-01015 Vitoria (Álava) (ES)
(74) Representative: Pons Ariño, Angel
(86) International application number: PCT/ES2012/070294
(87) International publication number: WO 2013/160494

(56) References cited:
- EP-A2- 0 565 015
- WO-A1-03/081077
- FR-A- 516 275
- US-A- 5 452 883

## Description

### OBJECT OF THE INVENTION

The present invention is framed within the field of gas springs and, more specifically, in the field of gas springs with safety systems.

The object of the invention consists of a gas spring with safety system that permits the high pressure gas contained in the spring to discharge in the event of overstroke of the piston rod of the gas spring.

### BACKGROUND OF THE INVENTION

Gas springs that comprise a piston rod which compresses a fluid in a compression chamber formed between the piston rod and a body where the piston rod is housed are known in the state of the art.

In the gas springs usually used in die cutters intended for cutting and stamping metallic pieces, when the tools are changed or when adjustment tasks are carried out, the stroke considered to be safe for the gas spring is frequently exceeded, and it can even be completely worn out, which leads to deformations in the body of the spring.

Due to the gas spring being a recipient of pressure, it may be advisable to evacuate the gas spring to prevent problems caused by said possible deformations of the gas spring.

Gas springs (WO 03/081077) are known in the state of the art which carry out that spring gas evacuation by means of the inclusion of a safety mechanism arranged on the body of the spring and which is struck by the piston rod in the event that its stroke is above a preset value.

In the previous systems the piston rod strikes against the lower part of the body of the gas spring, rendering it useless for future cycles. Additionally, this striking expels the safety mechanism towards the exterior due to the action of the pressurized gas contained inside the compression chamber. This expulsion of the safety mechanism will be performed at a higher velocity the higher the pressure is in the compression chamber, the pressures existing in the compression chambers of these types of gas springs being up to 300 bar at the moment when the gas spring is compressed, which is when the safety mechanisms or systems actuate.

Furthermore, the simply visual detection of whether or not the gas spring has any safety mechanism or system cannot be done in the previous systems.

### DESCRIPTION OF THE INVENTION

The present invention relates to a gas spring with safety system which comprises a piston rod which compresses a fluid in a compression chamber formed between the piston rod and a body where the piston rod is housed.

The gas spring safety system comprises a gas evacuation channel disposed on the piston rod which in turn comprises a first aperture connected to the compression chamber for a stroke of the piston rod greater than the nominal stroke thereof by a preset value, and a second aperture for discharging the gas to the exterior of the spring.

The gas spring further comprises a plug disposed in the space between the piston rod and the body of the gas spring, which closes the spring to achieve the leakproofness in the compression chamber together with a sealing element disposed in an interior recess of said upper plug and which is adjacent to the piston rod. This sealing element is disposed in a position defined by a stroke of the piston rod which is lesser than the preset value greater than the nominal stroke so that the first aperture can be connected to the compression chamber.

Therefore, the gas is leaked through the evacuation channel between the first aperture and,the second aperture for a stroke of the piston rod of the gas spring greater than its nominal stroke by a preset value, thus preventing this from representing a risk, and even though the body is crushed by the force of, for example, a press in that situation, it does not represent any danger because the gas has been removed and there is no risk that high-speed displacements of elements of the spring are produced.

### DESCRIPTION OF THE DRAWINGS

To complete the description that is being made, and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a cross-sectional view of the gas spring with safety system in a first embodiment of the present invention when the stroke of the piston rod has not begun.
Figure 2 shows a cross-sectional view of the gas spring with safety system from Figure 1 where the piston rod has exceeded its nominal stroke by a present value.
Figure 3 shows a cross-sectional view of the gas spring with safety system in a second embodiment of the present invention when the stroke of the piston rod has not begun.
Figure 4 shows a cross-sectional view of the gas spring with safety system from Figure 3 wherein the piston rod has exceeded its nominal stroke by a present value.
Figure 5 shows a cross-sectional view of the gas spring with safety system in a third embodiment of the present invention when the stroke of the piston rod has not begun.
Figure 6 shows a cross-sectional view of the gas spring with safety system from Figure 5 wherein the piston rod has exceeded its nominal stroke by a present value.

### PREFERRED EMBODIMENT OF THE INVENTION

The gas spring with safety system of the present invention shall be disclosed in detail, and in relation to the figures, below.

The gas spring with safety system comprises a piston rod (1) which compresses a fluid in a compression chamber (2) formed between the piston rod (1) and a body (3) where the piston rod (1) is housed.

The gas spring further comprises an annulus shaped plug (4) disposed in the space between the piston rod (1) and the body (3) of the gas spring, which closes the spring to achieve the leakproofness in the compression chamber (2) together with a sealing element (5) disposed in a first interior recess (6) of said plug (4) and which is adjacent to the piston rod (1).

The plug (4) further comprises a second inner recess (7) wherein a scraper (8) is housed which prevents particles or fluids from being introduced inside the gas spring.

The plug (4) further comprises a first outer recess (9) which permits the housing of both a locking ring (10) and a protective ring (11) which prevents the entrance of particles between the plug (4) and the body (3) of the gas spring and a second outer recess (12) which permits the housing of an O-ring (13) which permits the sealing of the joint between the plug (4) and the body (3) of the gas spring.

Between the second inner recess (7) and the first inner recess (6), the plug (4) can comprise a third inner recess (14) which permits the housing of a sleeve (15) which facilitates the displacement of the piston rod (1) through the inside of the body (3) of the gas spring.

The body (3) of the gas spring comprises a lateral orifice (16) wherein a charging valve (17) is housed that can be accessed through a sealing plug (18).

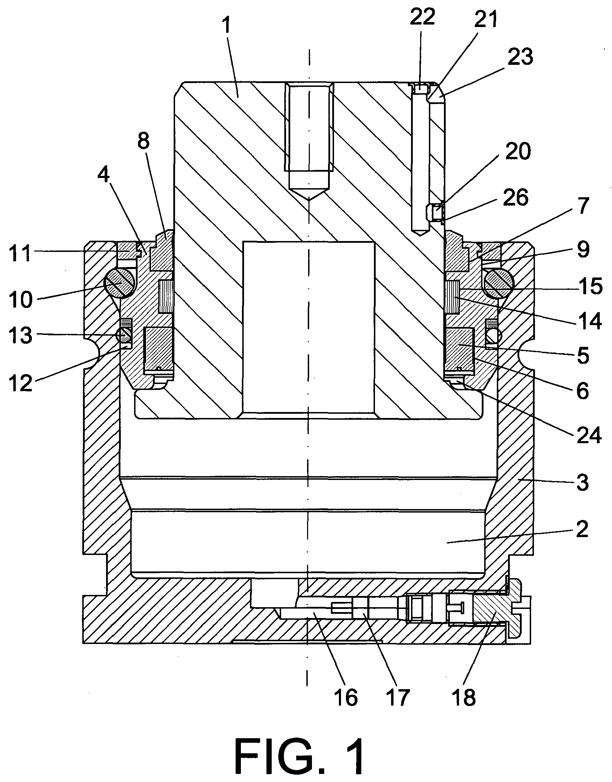

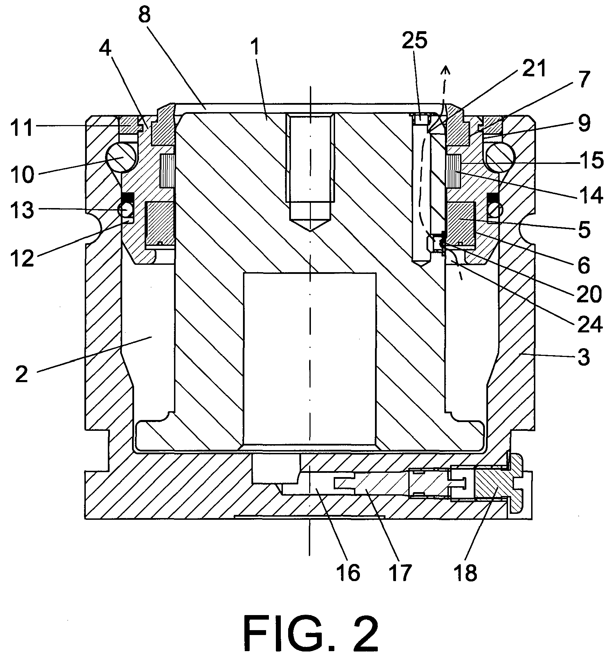

In a first example of embodiment shown in Figures 1 and 2, the safety system of the gas spring comprises an evacuation channel (19) of gas disposed in the piston rod (1) in a direction parallel to its axis in any position between the centre and the periphery thereof (1), which in turn comprises a first aperture (20) connected to the compression chamber (2) for a stroke of the piston rod (1) greater than its nominal stroke by a preset value, and a second aperture (21) for discharging the gas to the exterior of the spring, where said second aperture (21) comprises a first stretch (22) in the direction parallel to the axis of the piston rod (1) and a second stretch (23) in the radial direction, where the second stretch (23) guarantees that the second aperture (21) is not blocked by elements that may be in contact with the part of the piston rod (1) external to the body (3) of the gas spring, for example, for its actuation, such as a die cutter connected to a press (not shown).

The piston rod (1) comprises a first plug (25) and a second breakable plug (26) which are housed, respectively, in the first stretch (22) in the direction parallel to the axis of the piston rod (1) of the second aperture (21) and in the first aperture (20) to prevent the entrance of dirt into the evacuation channel (19) and to make sure that the scraper (8) correctly fulfils its function.

In a variant of this example of embodiment, the gas evacuation channel is sloping with respect to the axis of the piston rod (1).

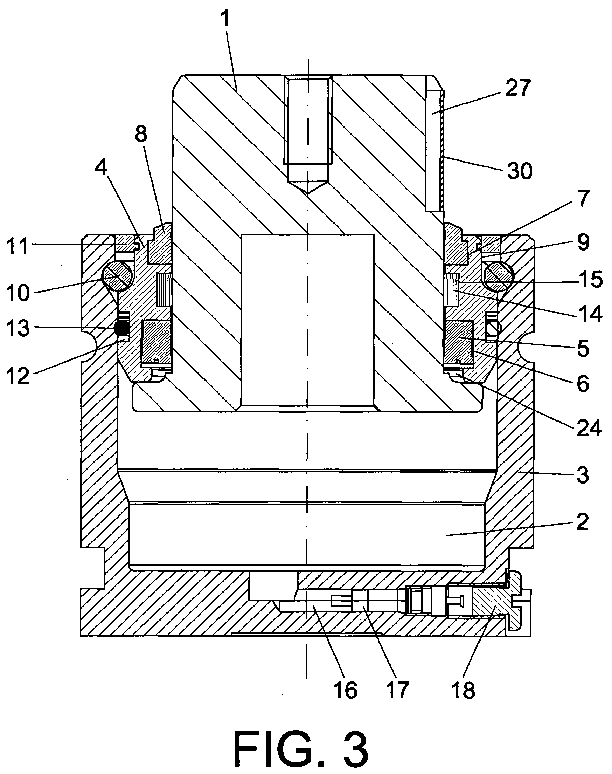

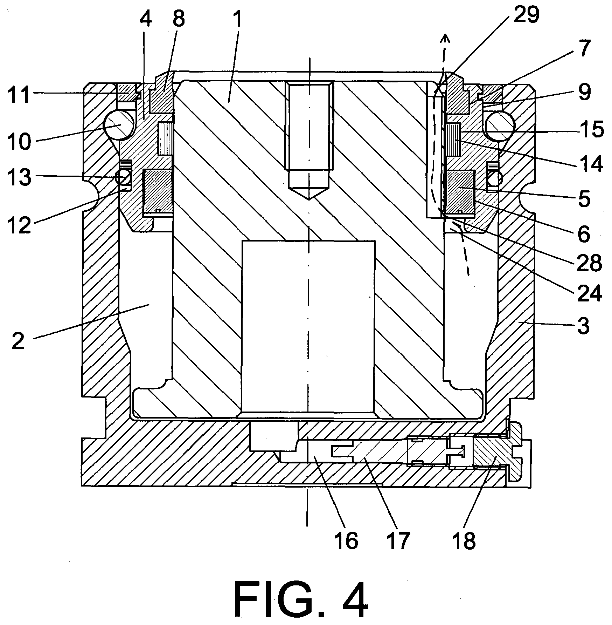

In a second example of embodiment shown in Figures 3 and 4, the safety system of the gas spring comprises a gas evacuation channel (27) disposed on the piston rod (1) in an end radial position thereof (1) and closed externally by means of a protective profile (30). The evacuation channel (27) comprises a first aperture (28) connected to the compression chamber (2) for a stroke of the piston rod (1) greater than its nominal stroke by a preset value, and a second aperture (29) for discharging the gas to the exterior of the spring. The first aperture (28) is defined by the breaking of the protective profile (30) when the piston rod (1) exceeds the nominal stroke by a preset value.

The second aperture (29) is defined by the protective profile (30), which does not reach the part of the piston rod (1) external to the body (3) of the gas spring.

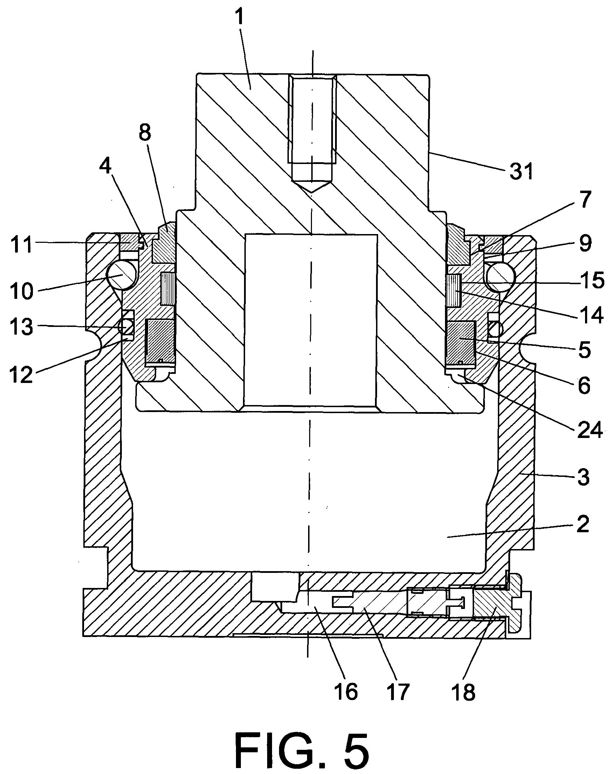

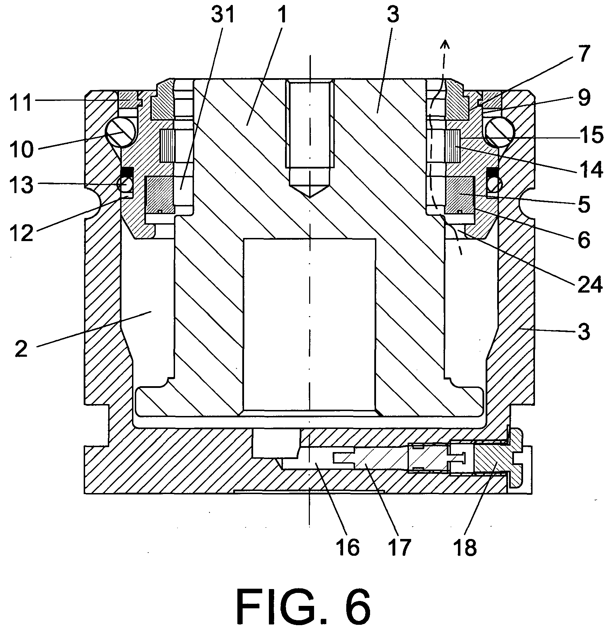

In a third example of embodiment shown in Figures 5 and 6, the safety system of the gas spring comprises a gas evacuation channel (31) defined by a circumferential recess with a constant cross-section present in the outline of the piston rod (1), circumferential gas channel which defines a first aperture connected to the compression chamber (2) for a stroke of the piston rod (1) greater than its nominal stroke by a preset value, and a second aperture for discharging the gas to the exterior of the gas spring.

The passing of the diameter of the piston rod (1) from the area of the circumferential recess shaped gas evacuation channel (31) to the area of the piston rod with nominal diameter can be carried out by means of an orthogonal plane, in a ramp or through any other surface arrangement between the two cylindrical surfaces.

In other examples of embodiment not shown in the figures, the evacuation channel can be defined by a circumferential recess with any other shape, i.e., of a non-constant cross-section, present in the outline of the piston rod, as long as it connects the compression chamber with the exterior of the piston rod when the piston rod reaches a stroke greater than its nominal stroke by a preset value.

In the previous examples of embodiment, the first aperture (20, 28) of the gas evacuation channel (19, 27, 31) is connected to the compression chamber (2) through a grooving (24) present in the upper plug (4), grooving (24) disposed in a position defined by a stroke of the piston rod (1) which is superior to the stroke position of the piston rod (1) where the sealing element (5) is arranged.

## Claims

1. Gas spring with safety system which comprises a piston rod (1) which compresses a fluid in a compression chamber (2) formed between the piston rod (1) and a body (3) where the piston rod (1) is housed, and a safety system wherein said safety system comprises a gas evacuation channels (19, 27, 31) disposed on the piston rod (1) **characterised in that** said gas evacuation channel comprises a first aperture (20, 28) connected to the compression chamber (2) for a stroke of the piston rod (1) greater than its nominal stroke by a preset value, and a second aperture (21, 29) for discharging the gas to the exterior of the gas spring.

2. Gas spring with safety system according to claim 1 **characterized in that** it further comprises a sealing element (5) arranged, with respect to the piston rod (1), in a position defined by a stroke of the piston rod (1) which is lesser than the preset value greater than the nominal stroke so that the first aperture (20, 28) can be connected to the compression chamber (2).

3. Gas spring with safety system according to any of the preceding claims **characterized in that** it further comprises a plug (4) disposed in the space between the piston rod (1) and the body (3) of the gas spring which closes the spring to achieve the leakproofness in the compression chamber (2).

4. Gas spring with safety system according to claims 2 and 3 **characterized in that** the plug (4) comprises a first inner recess (6) where the sealing element (5) is disposed.

5. Gas spring with safety system according to any of the preceding claims **characterized in that** the gas evacuation channel (19) is disposed on the piston rod (1) in a direction parallel to the axis thereof.

6. Gas spring with safety system according to any of the claims 1 to 4 **characterized in that** the gas evacuation channel is disposed on the piston rod (1) in a sloped direction with respect to the axis thereof.

7. Gas spring with safety system according to any of claims 5 or 6 **characterized in that** the second aperture (21) comprises a first stretch (22) in the direction parallel to the axis of the piston rod (1) and a second stretch (23) in the radial direction.

8. Gas spring with safety system according to claim 7 **characterized in that** the piston rod (1) comprises a first plug (25) and a second breakable plug (26) which are housed, respectively, in the first stretch (22) in the direction parallel to the axis of the piston rod (1) of the second aperture (21) and in the first aperture (20).

9. Gas spring with safety system according to any of claims 1 to 4 **characterized in that** the gas evacuation channel (27) is disposed on the piston rod (1) in an end radial position thereof (1).

10. Gas spring with safety system according to claim 8 **characterized in that** the gas evacuation channel (27) is closed externally by means of a protective profile (30).

11. Gas spring with safety system according to claim 10 **characterized in that** the first aperture (28) is defined by the breaking of the protective profile (30) when the piston rod (1) exceeds the nominal stroke by a preset value.

12. Gas spring with safety system according to claim 10 **characterized in that** the second aperture (29) is defined by the protective profile (30), which does not reach the part of the piston rod (1) external to the body (3) of the gas spring.

13. Gas spring with safety system according to any of claims 1 to 4 **characterized in that** the gas evacuation channel (31) is defined by a circumferential recess with a constant cross-section present in the outline of the piston rod (1).

14. Gas spring with safety system according to claim 13 **characterized in that** the passing of the diameter of the piston rod (1) from the area of the circumferential recess shaped gas evacuation channel (31) to the area of the piston rod (1) with nominal diameter is an orthogonal plane, a ramp or a surface arrangement between the two cylindrical surfaces.

15. Gas spring with safety system according to any of claims 1 to 4 **characterized in that** the gas evacuation channel is defined by a circumferential recess with an non-constant cross-section present in the outline of the piston rod (1).

16. Gas spring with safety system according to any of the preceding claims **characterized in that** the first aperture (20, 28) of the gas evacuation channel (19, 27, 31) is connected to the compression chamber (2) through a grooving (24) present in the upper plug (4).

17. Gas spring with safety system according to claim 16 **characterized in that** the grooving (24) is disposed in a position defined by a stroke of the piston rod (1) which is superior to the stroke position of the piston rod (1) where the sealing element (5) is arranged.

## Patentansprüche

1. Gasfeder mit einem Sicherheitssystem, die eine Kolbenstange (1), die eine Flüssigkeit in einer Verdichtungskammer (2) verdichtet, die zwischen der Kolbenstange (1) und einem Körper (3), in dem die Kolbenstange (1) untergebracht ist, gebildet ist, und ein Sicherheitssystem umfasst, wobei das besagte Sicherheitssystem einen an der Kolbenstange (1) angeordneten Gasabführungskanal (19, 27, 31) umfasst, **dadurch gekennzeichnet, dass** der besagte Gasabführungskanal eine erste mit der Verdichtungskammer (2) verbundene Öffnung (20, 28) für einen Hub der Kolbenstange (1), der deren Nennhub um einen vorgegebenen Wert überschreitet, und eine zweite Öffnung (21, 29) zur Ableitung des Gases aus der Gasfeder heraus umfasst.

2. Gasfeder mit einem Sicherheitssystem nach Anspruch 1, **dadurch gekennzeichnet, dass** sie weiterhin ein Dichtelement (5) umfasst, das in Bezug auf die Kolbenstange (1) in einer Position angeordnet ist, die durch einen Hub der Kolbenstange (1) definiert ist, der geringer als der vorgegebene, den Nennhub überschreitende Wert ist, sodass die erste Öffnung (20, 28) mit der Verdichtungskammer (2) verbunden werden kann.

3. Gasfeder mit einem Sicherheitssystem nach einem der vorhergehenden Ansprüche, **dadurch gekennzeichnet, dass** sie weiterhin einen Stopfen (4) umfasst, der im Raum zwischen der Kolbenstange (1) und dem Körper (3) der Gasfeder angeordnet ist und die Feder schließt, um die Dichtigkeit in der Verdichtungskammer (2) zu erzielen.

4. Gasfeder mit einem Sicherheitssystem nach den Ansprüchen 2 und 3, **dadurch gekennzeichnet, dass** der Stopfen (4) eine erste innere Vertiefung (6) umfasst, in der das Dichtelement (5) angeordnet ist.

5. Gasfeder mit einem Sicherheitssystem nach einem der vorhergehenden Ansprüche, **dadurch gekennzeichnet, dass** der Gasabführungskanal (19) an der Kolbenstange (1) parallel zu deren Achse angeordnet ist.

6. Gasfeder mit einem Sicherheitssystem nach einem der Ansprüche 1 bis 4, **dadurch gekennzeichnet, dass** der Gasabführungskanal an der Kolbenstange (1) schräg zu deren Achse angeordnet ist.

7. Gasfeder mit einem Sicherheitssystem nach einem der Ansprüche 5 oder 6, **dadurch gekennzeichnet, dass** die zweite Öffnung (21) eine erste Ausdehnung (22), die parallel zur Achse der Kolbenstange (1) verläuft, und eine zweite Ausdehnung (23), die in radialer Richtung verläuft, umfasst.

8. Gasfeder mit einem Sicherheitssystem nach Anspruch 7, **dadurch gekennzeichnet, dass** die Kolbenstange (1) einen ersten Stopfen (25) und einen zweiten zerbrechlichen Stopfen (26) umfasst, die in der ersten Ausdehnung (22), die parallel zur Achse der Kolbenstange (1) der zweiten Öffnung (21) verläuft, bzw. in der ersten Öffnung (20) untergebracht sind.

9. Gasfeder mit einem Sicherheitssystem nach einem der Ansprüche 1 bis 4, **dadurch gekennzeichnet, dass** der Gasabführungskanal (27) an der Kolbenstange (1) in einer endständigen radialen Position derselben (1) angeordnet ist.

10. Gasfeder mit einem Sicherheitssystem nach Anspruch 8, **dadurch gekennzeichnet, dass** der Gasabführungskanal (27) nach außen durch ein Schutzprofil (30) geschlossen ist.

11. Gasfeder mit einem Sicherheitssystem nach Anspruch 10, **dadurch gekennzeichnet, dass** die erste Öffnung (28) durch Brechen des Schutzprofils (30) definiert wird, wenn die Kolbenstange (1) den Nennhub um einen vorgegebenen Wert übersteigt.

12. Gasfeder mit einem Sicherheitssystem nach Anspruch 10, **dadurch gekennzeichnet, dass** die zweite Öffnung (29) durch das Schutzprofil (30) definiert wird, das den Teil der Kolbenstange (1) außerhalb des Körpers (3) der Gasfeder nicht erreicht.

13. Gasfeder mit einem Sicherheitssystem nach einem der Ansprüche 1 bis 4, **dadurch gekennzeichnet, dass** der Gasabführungskanal (31) durch eine am Umfang der Kolbenstange (1) umlaufende Vertiefung mit konstantem Querschnitt definiert wird.

14. Gasfeder mit einem Sicherheitssystem nach Anspruch 13, **dadurch gekennzeichnet, dass** der Übergang des Durchmessers der Kolbenstange (1) vom Bereich des als umlaufende Vertiefung ausgeformten Gasabführungskanal (31) zum Bereich der Kolbenstange (1) mit dem Nenndurchmesser eine orthogonale Ebene, eine Rampe oder eine Flächenanordnung zwischen den beiden zylindrischen Flächen ist.

15. Gasfeder mit einem Sicherheitssystem nach einem der Ansprüche 1 bis 4, **dadurch gekennzeichnet, dass** der Gasabführungskanal durch eine am Umfang der Kolbenstange (1) umlaufende Vertiefung mit einem nicht konstanten Querschnitt definiert wird.

16. Gasfeder mit einem Sicherheitssystem nach einem der vorhergehenden Ansprüche, **dadurch gekennzeichnet, dass** die erste Öffnung (20, 28) des Gasabführungskanals (19, 27, 31) über eine im oberen Stopfen (4) vorgesehene Rille (24) mit der Verdichtungskammer (2) verbunden ist.

17. Gasfeder mit einem Sicherheitssystem nach Anspruch 16, **dadurch gekennzeichnet, dass** die Rille (24) in einer durch einen Hub der Kolbenstange (1) definierten Position angeordnet ist, die die Hubposition der Kolbenstange (1) bei angeordnetem Dichtelement (5) überschreitet.

## Revendications

1. Ressort à gaz équipé d'un système de sécurité comprenant une tige de piston (1) qui compresse un liquide dans une chambre de compression (2) formée entre la tige de piston (1) et un corps (3) où la tige de piston (1) est logée, et un système de sécurité dans lequel ledit système de sécurité comprend un canal d'évacuation des gaz (19,27,31) disposé dans la tige de piston (1), **caractérisé en ce que** ledit canal d'évacuation des gaz comprend une première ouverture (20, 28) raccordée à la chambre de compression (2) pour une course de la tige de piston (1) supérieure à la course nominale par une valeur prédéterminée, et une seconde ouverture (21, 29) pour décharger le gaz vers l'extérieur du ressort à gaz

2. Ressort à gaz équipé d'un système de sécurité selon la revendication 1, **caractérisé en ce qu'**il comprend également un élément d'étanchéité (5) disposé, par rapport à la tige de piston (1), dans une position définie par la course de la tige de piston (1) qui est inférieure à la valeur prédéterminée supérieure à la course nominale de sorte que la première ouverture (20, 28) peut être raccordée à la chambre de compression (2).

3. Ressort à gaz équipé d'un système de sécurité selon l'une quelconque des revendications précédentes, **caractérisé en ce qu'**il comprend également un bouchon (4) disposé dans l'espace entre la tige de piston (1) et le corps (3) du ressort à gaz qui ferme le ressort pour réaliser l'étanchéité dans la chambre de compression (2).

4. Ressort à gaz équipé d'un système de sécurité selon les revendications 2 et 3, **caractérisé en ce que** le bouchon (4) comprend un premier enfoncement interne (6) où l'élément d'étanchéité (5) est disposé.

5. Ressort à gaz équipé d'un système de sécurité selon l'une quelconque des revendications précédentes, **caractérisé en ce que** le canal d'évacuation des gaz (19) est disposé sur la tige de piston (1) en position parallèle à l'axe de celui-ci.

6. Ressort à gaz équipé d'un système de sécurité selon l'une des revendications 1 à 4, **caractérisé en ce que** le canal d'évacuation des gaz est disposé sur la tige de piston (1) dans une position inclinée par rapport à l'axe de celui-ci.

7. Ressort à gaz équipé d'un système de sécurité selon l'une des revendications 5 ou 6, **caractérisé en ce que** la seconde ouverture (21) comprend une première partie (22) en direction parallèle à l'axe de la tige de piston (1) et une seconde partie (23) en direction radiale.

8. Ressort à gaz équipé d'un système de sécurité selon la revendication 7, **caractérisé en ce que** la tige de piston (1) comprend un premier bouchon (25) et un second bouchon cassable (26) qui sont logés, respectivement, dans la première partie (22) en direction parallèle à l'axe de la tige de piston (1) de la seconde ouverture (21) et dans la première ouverture (20).

9. Ressort à gaz équipé d'un système de sécurité selon l'une des revendications 1 à 4, **caractérisé en ce que** le canal d'évacuation des gaz (27) est disposé dans la tige de piston (1) dans une position radiale finale de celui-ci (1).

10. Ressort à gaz équipé d'un système de sécurité selon la revendication 8, **caractérisé en ce que** le canal d'évacuation des gaz (27) est fermé extérieurement au moyen d'un profil de protection (30).

11. Ressort à gaz équipé d'un système de sécurité selon la revendication 10, **caractérisé en ce que** la première ouverture (28) est déterminée par la rupture du profil de protection (30) lorsque la tige de piston (1) dépasse la course nominale par une valeur prédéterminée.

12. Ressort à gaz équipé d'un système de sécurité selon la revendication 10, **caractérisé en ce que** la seconde ouverture (29) est déterminée par le profil de protection (30), lequel n'atteint pas la partie de la tige de piston (1) externe au corps (3) du ressort à gaz.

13. Ressort à gaz équipé d'un système de sécurité selon l'une des revendications 1 à 4, **caractérisé en ce que** le canal d'évacuation des gaz (31) est déterminé par un renfoncement circonférentiel avec une coupe transversale constante présente dans le contour de la tige de piston (1)

14. Ressort à gaz équipé d'un système de sécurité selon la revendication 13, **caractérisé en ce que** le passage du diamètre de la tige de piston (1) depuis la zone du canal d'évacuation des gaz (31) formé d'un renfoncement circonférentiel vers la zone de la tige de piston (1) avec diamètre nominal est un plan orthogonal, une rampe ou une disposition de surface_entre les deux surfaces cylindriques.

15. Ressort à gaz équipé d'un système de sécurité selon l'une des revendications 1 à 4, **caractérisé en ce que** le canal d'évacuation des gaz est déterminé par un renfoncement circonférentiel avec une coupe transversale non constante présente dans le contour de la tige de piston (1).

16. Ressort à gaz équipé d'un système de sécurité selon l'une quelconque des revendications précédentes, **caractérisé en ce que** la première ouverture (20, 28) du canal d'évacuation des gaz (19, 27, 31) est connectée à la chambre de compression (2) au travers d'une rainure (24) présente dans le bouchon supérieur (4).

17. Ressort à gaz équipé d'un système de sécurité selon la revendication 16, **caractérisé en ce que** la rainure (24) est disposée dans une position déterminée par la course de la tige de piston (1) qui est supérieure à la position de course de la tige de piston (1) où l'élément d'étanchéité (5) est disposé.
